# EUROPEAN PATENT APPLICATION

(11) **EP 1 911 347 A1**
(43) Date of publication of application: **16.04.2008**
(21) Application number: 06122202.2
(22) Date of filing: 12.10.2006
(51) Int. Cl.: A01K 11/00

(54) **An ear marking arrangement and a method for ear marking a number of animals**

(71) Applicant: Advance Design Ltd., Hong Kong (HK)
(72) Inventor: Eriksen, Steen Mandsfelt, 3230, Græsted (DK)
(74) Representative: Holme Patent A/S

(57) **Abstract**

An ear marking arrangement comprises a number of first and second ear tag parts (2,3) of an ear tag, a tool (20) for assembling a first and second ear tag part on an ear of an animal, a first and second tool holder (25,26) of the tool (20) for detachably holding the first and second tag parts (2,3) in mutual positions in which they are ready to be assembled on the ear of the animal, and a magazine (12) for storing a number of ear tag parts (2,3). The magazine (12) comprises a number of first magazine holders (13) for detachably holding a first ear tag part (2), a number of second magazine holders (14) for detachably holding a second ear tag part (3), that the first and second magazine holders (13,14) are grouped in pairs, and that each pair of magazine holders (13,14) is adapted to hold a first and second tag part (2,3) in mutual positions corresponding to the mutual positions of a first and second tag part (2,3) received in the first and second tool holder (25,26). Many animals can successively be ear marked by means of the ear marking arrangement according to the invention without tiring the operator with the tiresome job of manually inserting the many tag parts one after another in their tool holders.

## Description

The invention relates to an ear marking arrangement comprising a number of first and second ear tag parts of an ear tag, a tool for assembling a first and second ear tag part on an ear of an animal, a first and a second tool holder of the tool for detachably holding the first and second tag parts in mutual positions in which they are ready to be assembled on the ear of the animal, and a magazine for storing a number of ear tag parts.

The invention also relates to a method for ear marking a number of animals with ear tags by means of the ear marking arrangement according to the invention.

Ear tags are used to distinguish animals, e.g. pigs, from each other.

An earmarking tool for attaching a tag consisting of a male and a female tag part to the ear of an animal is known from the application PCT/IB2006/052918 which is incorporated in the present application by reference.

Each of the tag parts to be assembled by means of this known earmarking tool is designed with a disc and the tool is equipped with two grooves for receiving the disc of one of the tag parts.

The tool has a handle and a lever. A toggle joint is activated by manually clamping the handle and the lever together whereby a punch is made to push a male tag part in one of the two grooves into engagement with a female tag part in the other groove.

The tool is, owing to its toggle joint, comfortable to operate.

Each of the ear tag parts is however one after another manually put into their respective grooves before operating the tool.

Feeding the tool with ear tag parts therefore becomes very time consuming and tiring when successively earmarking many animals.

The above-mentioned disadvantages of the prior art tools for earmarking many animals in succession are according to the present invention remedied by
in a first aspect of the invention providing an ear marking arrangement and an ear marking method of the kind mentioned in the opening paragraph by means of which many animals can be successively ear marked more rapidly than hitherto known,
in a second aspect of the invention providing an ear marking arrangement and an ear marking method of the kind mentioned in the opening paragraph by means of which many animals successively can be ear marked without tiring the operator,
in a third aspect of the invention providing an ear marking arrangement and an ear marking method of the kind mentioned in the opening paragraph by means of which the tool holders of the tool easily and quickly can be fed with ear tag parts from a store of ear tag parts,
in a fourth aspect of the invention providing an ear marking arrangement and an ear marking method of the kind mentioned in the opening paragraph by means of which the tool holders of the tool easily and quickly can be fed with ear tag parts from a store of ear tag parts without needing to manually handle the ear tag parts one after another.

The novel and unique features of the invention whereby these features are achieved consist in the fact that the ear marking arrangement comprises a number of first magazine holders of the magazine for detachably holding a first ear tag part, a number of second magazine holders of the magazine for detachably holding a second ear tag part, that the first and second magazine holders are grouped in pairs, and that each pair of magazine holders is adapted to hold a first and second tag part in mutual positions corresponding to the mutual positions of a first and second tag parts received in the first and a second tool holder.

Thereby, it is obtained that many animals can be earmarked rapidly in succession without tiring the operator since the operator only has to move the tool in and out of engagement with the magazine for feeding the tool with a pair of matching ear tag parts.

The magazine can, according to the invention, comprise a panel upon which the magazine holders are attached so that the ear tag parts are easily accessible. The panel can be a separate part of the magazine in form of a plate of e.g. metal or plastic. In another embodiment the magazine holders and the panels can be integrally made.

In an expedient embodiment according to the invention the ear tag parts can each be formed with a disc and the tool holders and magazine holders with groves for receiving parts of the disc whereby both the tool holders and the magazine holders easily can be fed with ear tag parts.

The groove in the magazine holders can moreover in a simple embodiment according to the invention be a space between two protruding fingers which are attached to the panel.

When the fingers are resilient and the space between them is slightly less than the thickness of the discs of the ear tag parts, it is advantageously obtained that the ear tag parts can be retained by the magazine holders with a spring resistance of a size large enough for safely being retained by the magazine holders and small enough for easily allowing the ear tag parts to be withdrawn from the magazine holders when feeding the tool with a pair of ear tag parts.

In another embodiment according to the invention the material of the ear tag parts can instead be resilient.

The groove of the tool holders engages the edge of the disc when withdrawing the ear tag part. A certain force must however be acting between the groove of the tool holder and the edge of the disc to make the tool holder able to withdraw the ear tag part from the magazine holder.

When the groove of each tool holder is formed as an open, mainly ring-formed, flat spring with two free ends and an opposite area attached to the tool, the groove can easily come into engagement with the disc and act upon this with an elastic force during the withdrawing operation.

Both a tool groove and a magazine groove are, during feeding the tool with an ear tag part, simultaneously engaging a disc of the ear tag part. This implies that said grooves each only can receive a part of the disc.

The groove of each tool holder can by way of example span more than 180° over a disc.

In a preferred embodiment according to the invention a partition can be attached to the panel between each of two neighboring pair of magazine holders and a guide slot can be formed in opposite sides of each of two neighboring partitions.

When the sides of the tool are equipped with guide rails fitting the guide slots, it is advantageously obtained that the tool holder can be safely guided into the correct position in relation to a magazine holder during the feeding operation.

The object, features and advantages of the invention will be explained in more details in the following with reference to the drawing in which,
Fig. 1 is a lateral view of a pair of matching ear tag parts according to the invention,
Fig. 2 is a perspective view of an ear marking magazine according to the invention for storing a number of a pair of the ear tag parts shown in fig. 1,
Fig. 3 is a fragmentarily perspective view of an ear marking tool according to the invention with empty tool holders for holding a pair of the ear tag parts shown in fig. 1 and assembling them on an ear of an animal, and an ear tag magazine holder of the ear marking magazine shown in fig. 2 placed separately from the ear marking tool and holding a pair of the ear tag parts shown in fig. 1,
Fig. 4 shows the same but with the ear marking tool moved up to the magazine holder for being fed with the pair of ear tag parts held by the magazine holder,
Fig. 5 shows the same but with the pair of ear tag parts moved from the magazine holder to the tool holder and the tool retracted from the magazine holder,
Fig. 6 is perspective view of the tool holders of the ear marking tool shown in figs. 3 - 5 formed as an open mainly ring-formed, flat spring,
Fig. 7 is a plan view of the ear marking tool and the ear marking magazine shown in fig. 3 placed apart from each other,
Fig. 8 shows the same but with the ear marking tool moved up to the magazine holder for being fed with the pair of ear tag parts hold by the magazine holder, and
Fig. 9 shows the same but with the pair of ear tag parts moved from the magazine holder to the tool holder and the tool retracted from the magazine holder.

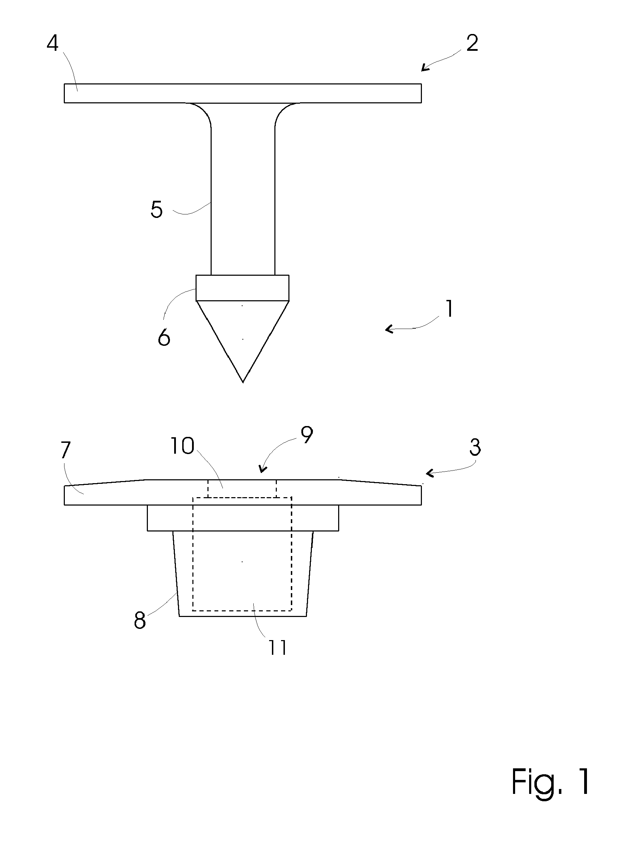

The pair of ear tag parts 1 shown in fig. 1 consists of a male tag part 2 and a female tag part 3.

The male tag part 2 comprises a disc 4, a stem 5 and a barb 6 on the stem.

The female tag part 3 comprises a disc 7 and a boss 8 extending from the disc and also an axial hole 9 which opens into the free and which has an upper section 10 with one diameter and a lower section 11 with a larger diameter than the diameter of the upper section 10.

The barb 6 of the male tag part 2 is, by operating the tool (not shown in fig. 1), forced to penetrate the ear (not shown) of an animal (not shown) and engage the lower upper section 10 of the axial hole 9 in the female tag part 3 via the upper section 10 of this.

Subsequently, the punch is retracted and the tool removed. The ear tag is now safely secured to the ear (not shown) with a tag part placed on either side of the ear.

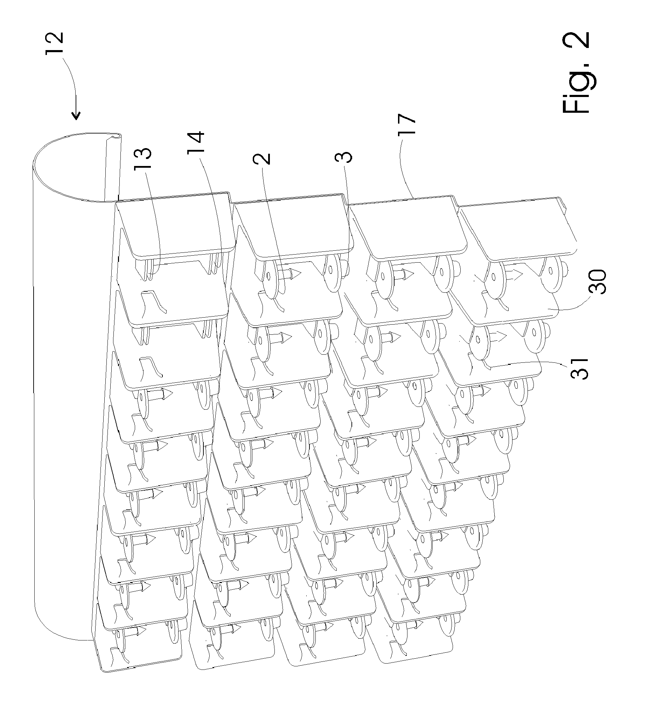

Fig. 2 shows an ear marking magazine 12 with in this case four rows of upper and lower magazine holders 13 and 14. The upper magazine holder 13 is adapted to detachable holding a male tag part 2 while the lower magazine holder 14 is adapted to detachable holding a female tag part 3.

The tag parts have been removed from the two first magazine holders in the upper row of magazine holders for being used for ear marking an animal (not shown).

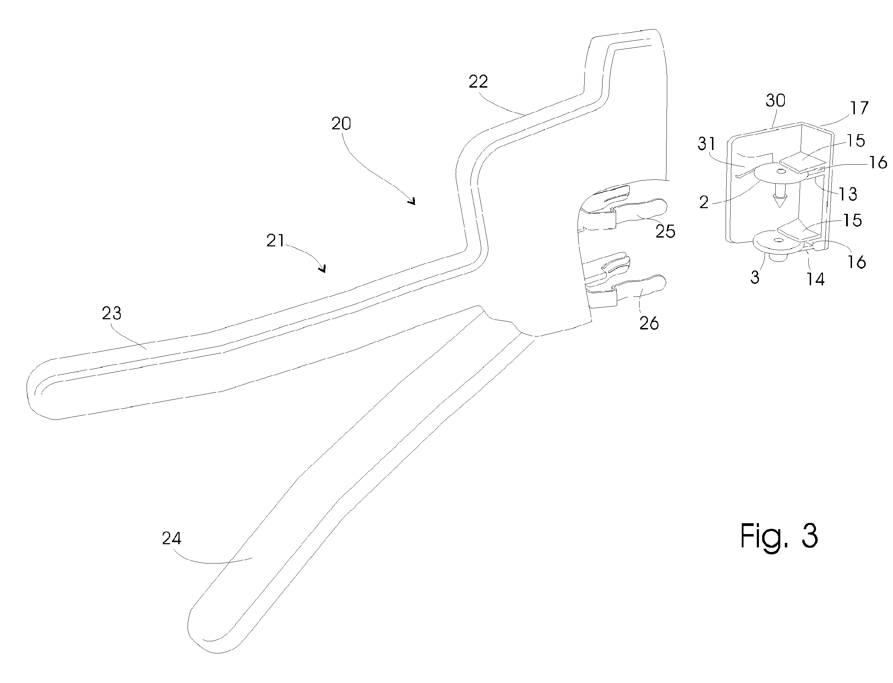

As can be seen best in figs. 3 - 5, each magazine holder 13, 14 consists of two fingers 15 which define a groove 16 for detachably holding a part of a disc 4, 7 of the tag part 2, 3 by means of for example a slight spring load performed by the fingers and/or the discs.

The magazine holders 13, 14 are attached to a panel 17 in form of a plate of e.g. metal. This plate is at the top bent to a semicircle, seen in cross section, for hanging the ear magazine on e.g. a rail (not shown) in e.g. a pigsty (not shown) while ear marking a number of pigs (not shown).

In other embodiments according to the invention (not shown), that panel can have a curved shape so that the operator can carry the magazine on e.g. his wrist or waist.

Figs. 3 - 5 show an ear marking tool 20 for assembling the ear tag parts 2 and 3 on an ear (not shown) of an animal, e.g. a pig (not shown).

The tool comprises a base 21 which consists of a main base 22 and a handle 23 integrally connected to the main base. A lever 24 is pivotally mounted on the main base.

The tool has an upper tool holder 25 for detachably holding a male tag part 2 and a lower tool holder 26 for detachably holding a female tag part 3.

The ear marking operation takes place by placing an ear (not shown) of an animal (not shown) between the upper and lower tool holder and manually clamping the handle and the lever together so that the the barb of the male tag part is forced to penetrate the ear (not shown) of an animal (not shown) and engage the lower section of the axial hole in the female tag part after which the tool is removed from the ear.

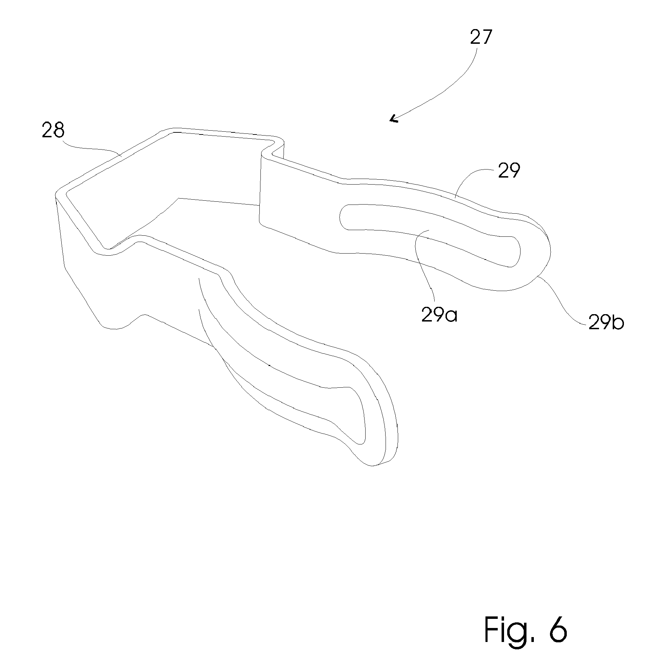

Fig. 6 shows that the tool holders 25, 26 of the ear marking tool are formed as an open, mainly ring-formed, flat spring 27 with a base 28 attached to the tool (not seen) and two legs 29 protruding from the base. Each leg 29 is formed with a groove 29a for holding the disc 4,7 of an ear tag part 2,3 (not shown). The free ends 29b of the legs are moreover bent slightly outwards for making it easy for the operator to catch the discs with the springs when inserting the tool in the magazine. The discs of the tag parts are safely retained by the spring force of the spring when retracting the tool.

Figs. 3 - 5 show how the ear marking tool 20 is fed with ear tag parts 2 and 3 from the magazine holder 13, 14 which in the figures is shown with some parts removed.

As mentioned above, each of the magazine holders is formed as two fingers 15 which define a groove 16. A male tag part 2 is held by the upper magazine holder 13 while a female tag part is held by the lower magazine holder 14. More specifically, a part of the discs 4, 7 of the tag parts is introduced in the groove between the fingers of the pair of magazine holders. Said part of the discs is less than 180°.

In fig. 3, the ear marking tool is placed separately from the ear marking holder magazine. The tool holders 25, 26 in form of the springs 27 are empty.

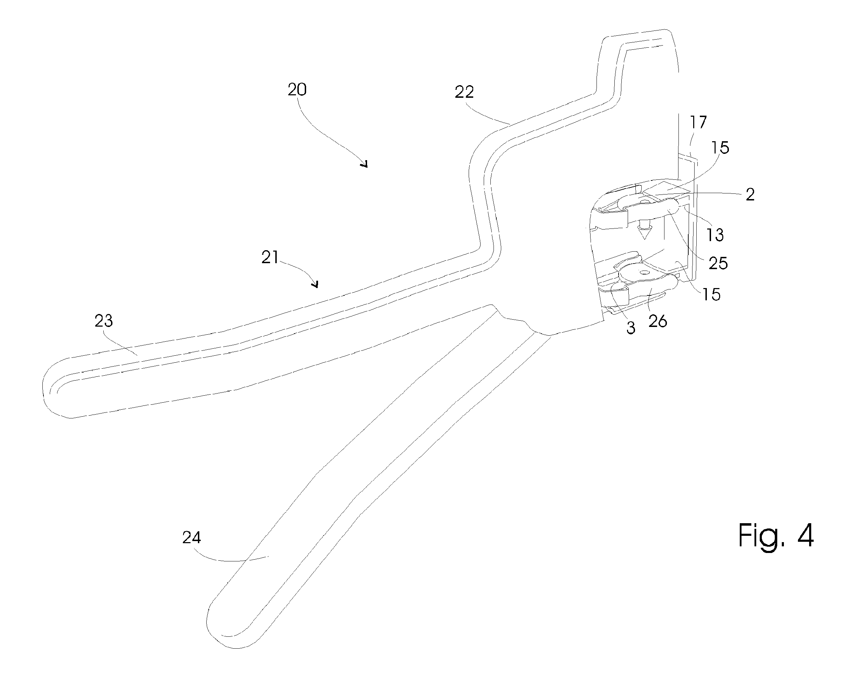

In fig. 4, the tool 20 has been moved up to the magazine 12 while the spring holders 25 and 26 have engaged the discs 4 and 7 of the male and female tag parts 2 and 3. The discs have easily been introduced into the empty tool spring holders owing to the outwardly bent end parts of the springs.

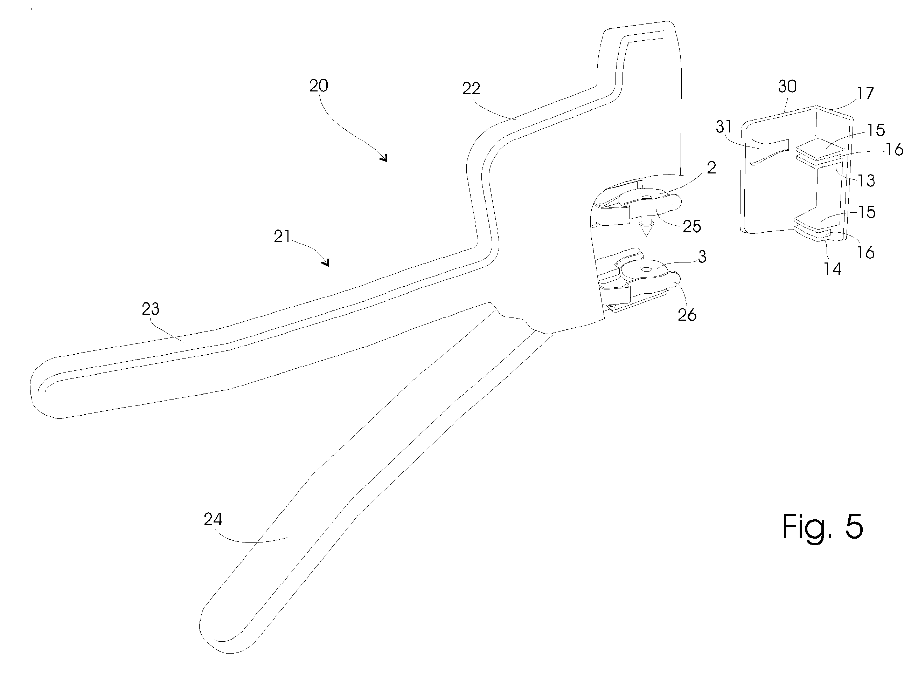

The discs are jammed in the springs by a slight spring force, and they are spanning an angle of more than 180° over the discs. The discs are therefore safely withdrawn from the ear marking holders when moving the ear marking tool away from the ear marking magazine as shown in fig. 5.

This inventive way to feed the ear marking tool with ear tag parts can, as can be appreciated, advantageously be performed quickly and effectively without tiring the operator.

At the same time and in only one feeding operation, the earmarking tool 20 has thus been fed with both a male and a female ear tag part 2, 3 which are now ready to be assembled to an ear tag upon an ear (not shown) of an animal (not shown).

As can be seen in fig. 2, a partition 30 is attached to the panel 17 between each of two neighboring pairs of magazine holders 13, 14.

A guide slot 31, which also can be seen in figs. 3 - 5, is formed in each side of the partition.

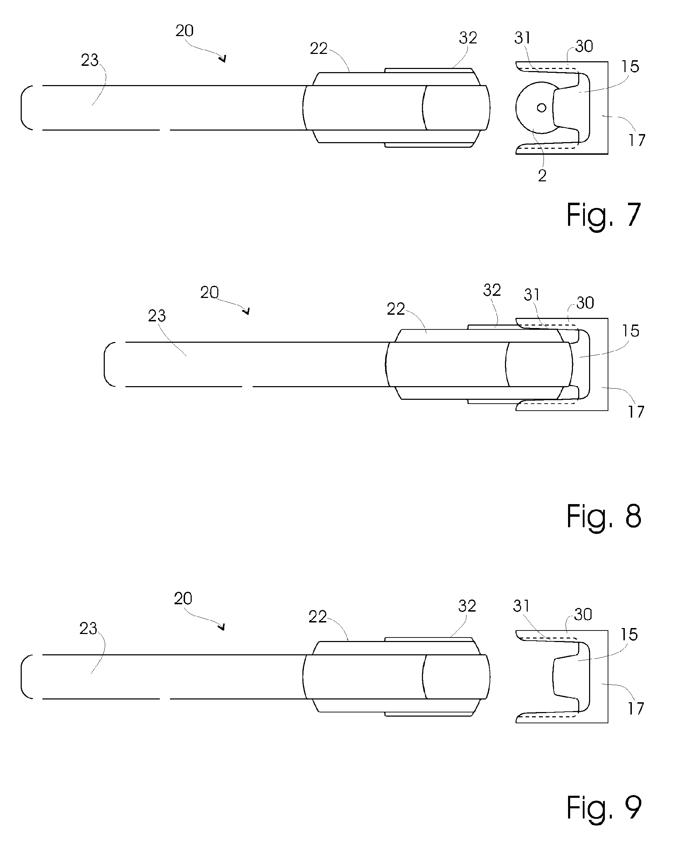

The same tag part feeding steps, which are shown in figs. 3 - 5 in perspective, are shown in figs. 7 - 9 from the top.

Figs. 7 - 9 show that the sides of the ear marking tool 20 are equipped with guide rails 32 corresponding to the guide slots 31 in the partitions 30.

The guide slots 31 in the partitions 30 on the ear marking magazine 12 and the corresponding guide rails 32 on the ear marking tool 20 make the feeding of the ear marking tool with ear tag parts from the ear marking magazine quick and easy since the tool is properly guided during the whole feeding operation.

As seen in fig. 2, the rows of upper and lower magazine holders 13, 14 are placed close to each other for thereby obtaining a compact and inexpensive magazine. The rows are offset in relation to each other in the direction perpendicular to the panel for thereby avoiding that the upper part of the tool comes into collision with the magazine holders above when getting tag parts from a pair of magazine holders.

## Claims

1. An ear marking arrangement comprising
- a number of first and second ear tag parts (2,3) of an ear tag,
- a tool (20) for assembling a first and second ear tag part (2,3) on an ear of an animal,
- a first and second tool holder (25,26) of the tool (20) for detachably holding the first and second tag part (2,3) in mutual positions in which they are ready to be assembled on the ear of the animal, and a magazine (12) for storing a number of ear tag parts (2,3),
**characterized in that** the magazine (12) comprises
- a number of first magazine holders (13) for detachably holding a first ear tag part (2),
- a number of second magazine holders (14) for detachably holding a second ear tag part (3),
- that the first and second magazine holders (13,14) are grouped in pairs, and
- that each pair of magazine holders (13,14) is adapted to hold a first and second tag part (2,3) in mutual positions corresponding to the mutual positions of a first and second tag parts (2,3) received in the first and second tool holder (25,26).

2. An ear marking arrangement according to claim 1, **characterized in that** the magazine (12) comprises a panel (17) upon which the magazine holders (13,14) are attached.

3. An ear marking arrangement according to claim 1 or 2, where each of the ear tag parts (2,3) is designed with a disc (4,7) and each of the tool holders (25,26) with a groove (29a) for receiving a part of the disc (4,7), **characterized in that** each of the magazine holders (13,14) is formed with a groove (16) for receiving a part of the disc (4, 7).

4. An ear marking arrangement according to claim 3, **characterized in that** the groove (16) of each magazine holder (13,14) is formed as a space between two protruding fingers (15) which are attached to the panel (17).

5. An ear marking arrangement according to claim 4, **characterized in that** the fingers (15) of each magazine holder (13,14) are resilient while the width of the groove (16) between the fingers (15) is slightly less than the thickness of the disc (4,7) of a tag part (2,3).

6. An ear marking arrangement according to claim 4 or 5, **characterized in that** the groove (16) of each magazine holder (13,14) is adapted to receive a segment less than 180° of a disc (4,7) of a tag part (2, 3) .

7. An ear marking arrangement according to any of the claims 3 - 6, **characterized in that** the groove (29a) of each tool holder (25,26) is adapted to receive a segment larger than 180° of a disc (4,7) of a tag part (2, 3) .

8. An ear marking arrangement according to any of the claims 1 - 7, **characterized in that** the groove (29a) of each tool holder (25,26) is formed as an open, mainly ring-formed, flat spring (27) with two free ends (29b) and an opposite base (28) attached to the tool (20).

9. An ear marking arrangement according to any of the claims 1 - 8, **characterized in that** a partition (30) is attached to the panel (17) between each of two neighboring pair of magazine holders (13,14).

10. An ear marking arrangement according to claim 9, **characterized in that** a guide slot (31) is formed in at least one of the opposite sides of each of two neighboring partitions (30) and that at least one of the sides of the tool (20) is equipped with a guide rail (32) fitting to the slot (31).

11. A method for ear marking a number of animals with ear tags by means of the ear marking arrangement according to claims 1 - 10, **characterized in**
- **that** a number of ear tag parts (2,3) are detachably placed in each their magazine holder (13,14),
- **that** the tool (20) is displaced so that a segment of the disc (4,7) of the tag parts (2,3) in a magazine holder (13,14) is received in the corresponding tool holder (25,26),
- **that** the tool (20) with the ear tag parts (2,3) is removed from the magazine (12) and positioned with an ear tag part (2,3) on either side of an ear of an animal to be ear marked, and
- **that** the tool (20) is activated so that the ear tag parts (2,3) are assembled on the ear, and
- **that** the tool (20) is removed from the ear.
